# NEUE EUROPÄISCHE PATENTSCHRIFT

(11) **EP 2 586 333 B2**
(45) Veröffentlichungstag und Bekanntmachung des Hinweises auf die Entscheidung über den Einspruch: **02.06.2021**
(45) Hinweis auf die Patenterteilung: 10.12.2014
(21) Anmeldenummer: 13152813.5
(22) Anmeldetag: 16.10.2009
(51) Int. Cl.: A47B 88/10, A47B 88/14, F16C 29/04, F16C 33/40, F16C 33/44, F16C 33/38

(54) **Auszugsführung**
Pull-out guide
Guidage d'extraction

(30) Priorität: 28.10.2008 DE 102008053504
(43) Veröffentlichungstag der Anmeldung: 01.05.2013
(62) Teilanmeldung aus: 09737406.0
(73) Patentinhaber: Paul Hettich GmbH & Co. KG, 32278 Kirchlengern (DE)
(72) Erfinder: Jährling, Peter, 32257 Bünde (DE); Hoffmann, Andreas, 32278 Kirchlengern (DE)
(74) Vertreter: Dantz, Jan Henning

(56) Entgegenhaltungen:
- EP-A- 0 439 774
- EP-A- 1 589 291
- EP-A- 1 873 460
- DE-T2- 3 881 901
- US-A- 5 230 570

## Beschreibung

Die vorliegende Erfindung betrifft eine Auszugsführung nach dem Oberbegriff des Anspruches 1.

Es ist bekannt, dass Auszugsführungen für eine leichtgängige Verfahrbarkeit der verfahrbar gelagerten Schienen geschmiert werden, damit die Wälzkörper entlang der Laufbahnen verbesserte Laufeigenschaften aufweisen und zudem der Korrosionsschutz erhöht ist. Zudem lassen sich über eine Schmierung mit Fett die Laufgeräusche dämpfen. Bei Auszugsführungen tritt allerdings das Problem auf, dass diese nicht abgedichtet sind und es zu Beeinträchtigungen durch eindringende Fremdkörper oder Verschmutzungen kommen kann. Zudem kann die Schmierung ungewollt entfernt werden. Der Auftrag des Fettes erfolgt in der Regel bei der Herstellung, wobei die Dosierung schwierig ist, da ein Großteil des Fettes auf Flächen aufgetragen wird, die nie in Kontakt mit den Wälzkörpern kommen. Dies ist materialintensiv, wobei ein Fettüberschuss auch die Laufgüte und Funktion negativ beeinflussen kann.

Die EP 1 589 291 A1 offenbart ein Auszugssystem für ein Haushaltsgerät, bei dem ein Wälzkörperkäfig zwischen zwei Schienen eine Schmierstoffschicht aufweist. Durch die Schmierstoffbeschichtung sollen die die Wälzkörper an dem Wälzkörperkäfig und das Auszugssystem geschmiert werden.

Es ist daher Aufgabe der vorliegenden Erfindung, eine Auszugsführung für Möbel zu schaffen, die eine optimierte Schmierung aufweist.

Diese Aufgabe wird mit einer Auszugsführung mit den Merkmalen des Anspruches 1 gelöst.

Erfindungsgemäß wird eine Auszugsführung für Möbel bereitgestellt, bei der die Wälzkörper in einem Wälzkörperkäfig gelagert sind, der zumindest teilweise aus einem schmierstoffhaltigen Material besteht. Dadurch kann die Schmierung der Wälzkörper gezielt dort erfolgen, wo ein Schmierstoffbedarf besteht, nämlich an den bewegten Flächen der Wälzkörper, die dann für eine gewisse Benetzung der Laufflächen an den Schienen sorgen. Es wird vermieden, dass Schmierstoff auf Flächen gelangt, die nicht geschmiert werden müssen. Zudem kann eine exakte Dosierung des Schmierstoffes über eine lange Zeit erfolgen, da das Aufbringen von Schmierstoff nicht nur einmalig bei der Herstellung erfolgt, sondern kontinuierlich während einer Benutzung der Auszugsführung.

Die thermische Eigenbewegung von Teilchen liegt der Diffusion zugrunde. Teilchen können Atome, Moleküle oder Ladungsträger sein. In dem vorliegenden Fall handelt es sich um Schmierstoff-Moleküle. Ein makroskopischer Stofftransport wird dadurch bewirkt, dass bei ungleichmäßiger Verteilung sich statistisch mehr Teilchen aus dem Bereich hoher Konzentration in den Bereich geringerer Konzentration bewegen als umgekehrt. Damit ist bis zum Konzentrationsausgleich eine Schmierung der Auszugsführung gewährleistet. Den beschriebenen Diffusionsvorgängen können die Fick'schen Gesetze zugrunde gelegt werden.

Gemäß einer bevorzugten Ausgestaltung der Erfindung gleiten die Wälzkörper an dem schmierstoffhaltigen Material mit einer Kontaktfläche entlang. Dadurch kann die Kontaktfläche der Wälzkörper mit Schmierstoff benetzt werden, wobei die Wälzkörper dann für eine Verteilung auf die Laufbahnen sorgen. Das schmierstoffhaltige Material kann für einen langen Zeitraum die Wälzkörper schmieren, da der in dem Material enthaltene Schmierstoff an die Oberfläche diffundiert und insofern bei jeder Bewegung der Wälzkörper ein geringer Anteil des Schmierstoffes auf den Wälzkörper übertragen wird. Diese gezielte Schmierung der Wälzkörper führt zu einem optimalen Schmierverhalten. Insbesondere können auch niedrigviskose Schmierstoffe eingesetzt werden, z.B. Öle, die bei einer einmaligen Schmierung bei der Herstellung der Ausziehführung nicht eingesetzt werden können.

Durch eine geringe Viskosität des Schmierstoffes kann ein großer Temperaturbereich für den Einsatz der Auszugsführungen abgedeckt werden. Somit können in Tiefkühlgeräten die gleichen Auszugsführungen wie in Backöfen eingesetzt werden. Durch die Einlagerung des Schmierstoffes in das schmierstoffhaltige Material tritt nach der Nutzung von Backofenfunktionen wie z.B. der Pyrolysefunktion wieder neuer Schmierstoff durch Diffusion an die Kontaktfläche zu dem Wälzkörper und bewirkt somit seine Schmierung. Der Schmierstoff ist daher vorzugsweise in einem Bereich von über 200°C, insbesondere auch in einem Bereich von über 400°C einsetzbar. Im Tiefkühlbereich ist der Schmierstoff vorzugsweise in einem Bereich unter -15°C einsetzbar, insbesondere auch in einem Bereich unter -40°C einsetzbar.

Als schmierstoffhaltiges Material ist auch eine Substanz wie z.B. ein Wachs denkbar, die den Schmierstoff nach und nach freisetzt.

In einer Ausgestaltung ist das schmierstoffhaltige Material ein poröser Körper aus Sintermaterial oder Kunststoff, in dem Öl als Schmierstoff eingelagert ist. Das eingelagerte Öl kann durch Kapillare oder extra eingerichtete Kanäle nachfließen. Der Körper kann nach Art eines Schwammes Schmierstoff aufnehmen und dann bei Betätigung der Auszugsführung nach und nach wieder abgeben.

Als Trägermaterialien für den Wälzkörperkäfig können alle Materialien genutzt werden, die über eine höhere Festigkeit als das schmierstoffhaltige Material verfügen. Sie müssen den Belastungen bei der Verwendung der Auszugsführung standhalten.

In der erfindungsgemäßen Ausgestaltung weist der Wälzkörperkäfig eine Vielzahl von Taschen auf, in die jeweils ein Wälzkörperhalter aus schmierstoffhaltigem Material eingefügt ist. In diesem Wälzkörperhalter ist mindestens ein Wälzkörper drehbar eingelagert. Der Wälzkörperhalter kann dabei form-, kraft oder stoffschlüssig an dem Wälzkörperkäfig festgelegt sein, wobei vorzugsweise an einem Wälzkörperhalter mehrere Wälzkörper eingelagert sind.

Bei einem Verfahren zur Herstellung einer Auszugsführung werden zunächst eine Führungsschiene und mindestens eine Laufschiene hergestellt. Ferner wird mindestens ein poröser Körper, der zumindest einen Teil eines Wälzkörperkäfigs bildet mit Schmierstoff getränkt. Anschließend wird die Führungsschiene, der Wälzkörperkäfig und die mindestens eine Laufschiene zu einer Auszugsführung zusammengesetzt, wobei ein Schmieren der Wälzkörper und der Laufflächen durch Bewegen der mindestens einen Laufschiene relativ zu der Führungsschiene erfolgt. Ergänzend kann die Auszugsführung mit einer auszugsverlängernden Mittelschiene ausgestattet sein, um einen Vollauszug zu realisieren. Diese Mittelschiene wird dann zwischen Führungsschiene und Laufschiene angeordnet.

Zur Beschleunigung der Sättigung des schmierstoffhaltigen Materials mit Schmierstoff kann ein Hochdruck-Verfahren wie z.B. eine Kesseldruckimprägnierung eingesetzt werden. Hierbei wird der Schmierstoff bei Drücken bis zu 15 bar in das poröse Material gepresst um das schmierstoffhaltige Material zu erhalten.

Durch jede Betätigung der Auszugsführung wird eine Schmierung der Auszugsführung ausgelöst. Durch die Bewegung der Wälzkörper bzw. der Auszugsführung wird Schmierstoff in die Laufbahnen der Auszugsführung übertragen. Durch die Übertragung von Schmierstoff an der Kontaktfläche schmierstoffhaltiges Material zum Wälzköper bzw. zur Laufbahn der Auszugsführung sinkt die Schmierstoffkonzentration in der Nähe der Kontaktfläche im schmierstoffhaltigen Material. Durch weiter vorne beschriebene Diffusionsvorgänge erfolgt über einen gewissen Zeitraum ein Schmierstoff-Konzentrationsausgleich im schmierstoffhaltigen Material. Durch jede Betätigung der Auszugsführung werden diese Vorgänge erneut ausgelöst.

Vorzugsweise umfasst der Wälzkörperkäfig ein leistenförmiges Trägermaterial, an dem ein poröser Körper beschichtet oder mechanisch festgelegt wird. Dies ermöglicht eine Herstellung der Auszugsführung mit einer geringen Masse, insbesondere wenn als Trägermaterial ein Kunststoff eingesetzt wird. Dabei kann das Trägermaterial an gegenüberliegenden Endseiten mit einem porösen Körper beschichtet werden um an den porösen Körpern Taschen zur Aufnahme der Wälzkörper auszubilden.

Alternativ ist eine Fertigung der porösen Körper als Einzelkomponenten aus keramischen oder metallischen Werkstoffen denkbar.

Die Erfindung wird nachfolgend anhand eines Ausführungsbeispieles mit Bezug auf die beigefügten Zeichnungen näher erläutert. Es zeigen:

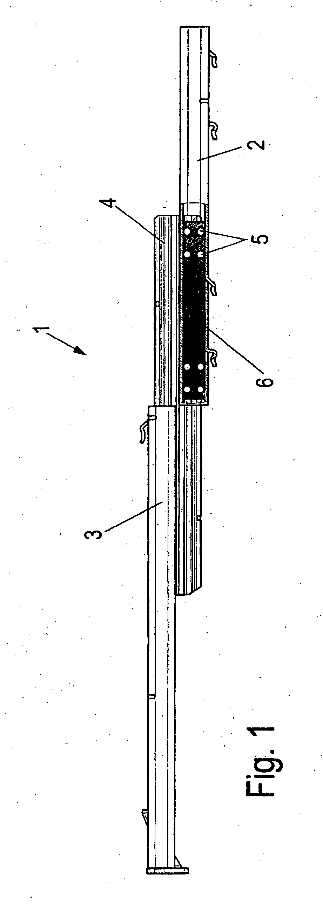

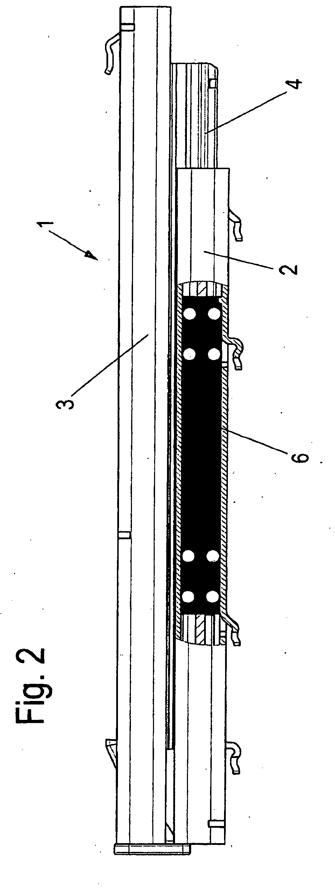

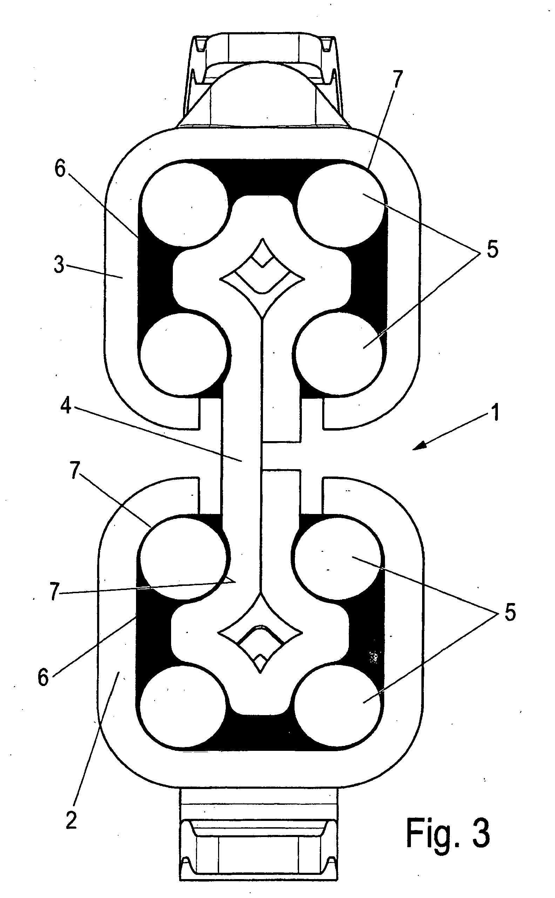

- Figuren 1 - 3: mehrere Ansichten eines Ausführungsbeispieles einer Auszugsführung; und
- Figuren 4 - 8: mehrere Ansichten eines Ausführungsbeispieles eines Wälzkörperkäfigs einer erfindungsgemäßen Auszugsführung.

Eine Auszugsführung 1 umfasst eine an einem Möbelkorpus montierbare Führungsschiene 2 und eine Laufschiene 3, an der ein Schubkasten oder anderes Schubelement montiert werden kann. Die Laufschiene 3 ist über Wälzkörper an einer Mittelschiene 4 gelagert, die wiederum über Wälzkörper 5 an der Führungsschiene 2 verfahrbar gelagert ist. Es ist auch möglich, an der Führungsschiene 2 die Laufschiene 3 direkt über Wälzkörper 5 ohne eine Mittelschiene 4 zu lagern.

Bei der Auszugsführung 1 sind die Wälzkörper 5 zwischen Führungsschiene 2 und Mittelschiene 4 sowie der Mittelschiene 4 und der Laufschiene 3 in einem Wälzkörperkäfig 6 gelagert, der einstückig aus einem schmierstoffhaltigen Material hergestellt ist. Der Wälzkörperkäfig 6 ist aus einem porösen Körper aus Sintermaterial oder Kunststoff gebildet, in dem Öl als Schmierstoff eingelagert ist. Dabei sind die Wälzkörper 5 durch das schmierstoffhaltige Material umspritzt.

Der Wälzkörperkäfig 6 füllt somit den Innenraum zwischen der Führungsschiene 2 und der Mittelschiene 4 sowie der Mittelschiene 4 und der Laufschiene 3 weitgehend aus, so dass die Wälzkörper 5 vor Verschmutzungen geschützt angeordnet sind. Zudem kann der Schmierstoff durch Kapillaren oder entsprechende Kanäle in dem Wälzkörperkäfig 6 auf die Kontaktflächen der Wälzkörper 5 gelangen, die dann den Schmierstoff auf die Laufbahnen 7 verteilen. Bei jeder Bewegung der Auszugsführung 1 werden die Wälzkörper 5 gedreht, so dass die Kontaktflächen der Wälzkörper 5, die an dem Wälzkörperkäfig 6 anliegen, geringfügig mit Schmierstoff benetzt werden. Dadurch erfolgt während der gesamten Lebensdauer der Auszugsführung 1 kontinuierlich eine Schmierung, die über einen sehr langen Zeitraum aufrecht erhalten werden kann.

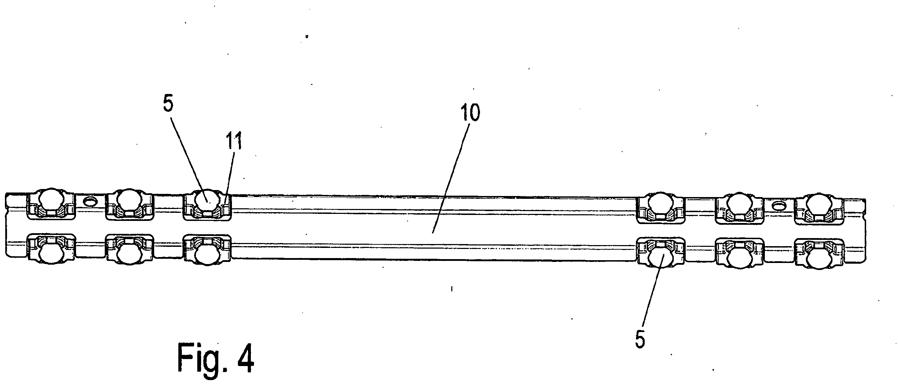

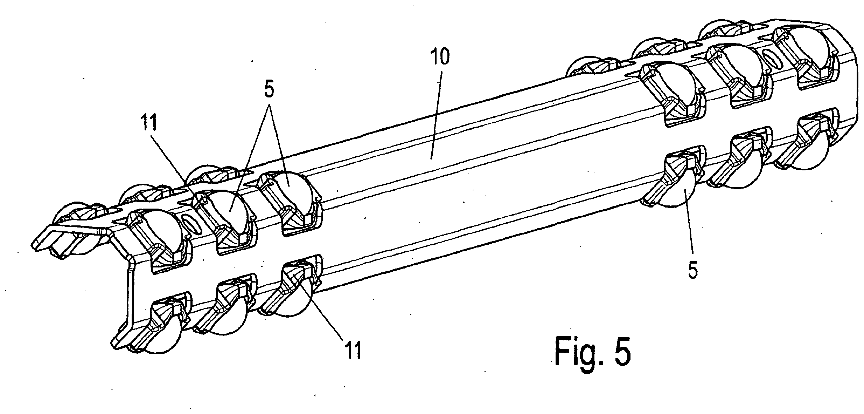

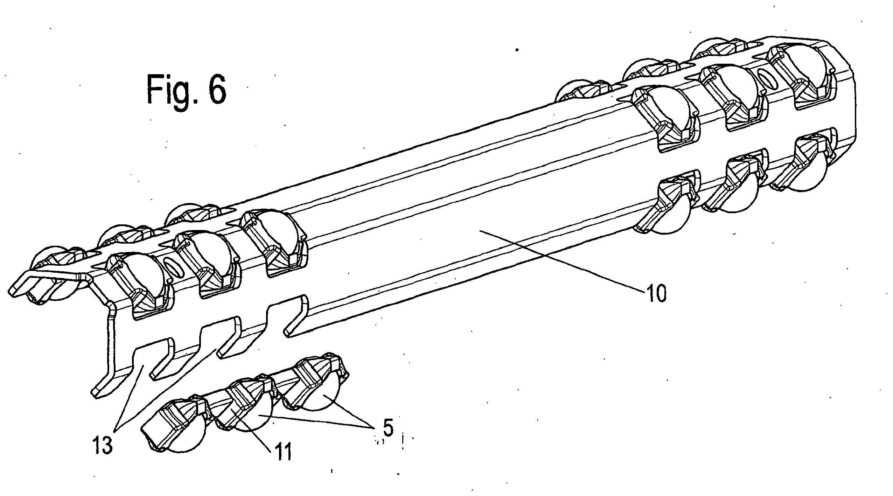

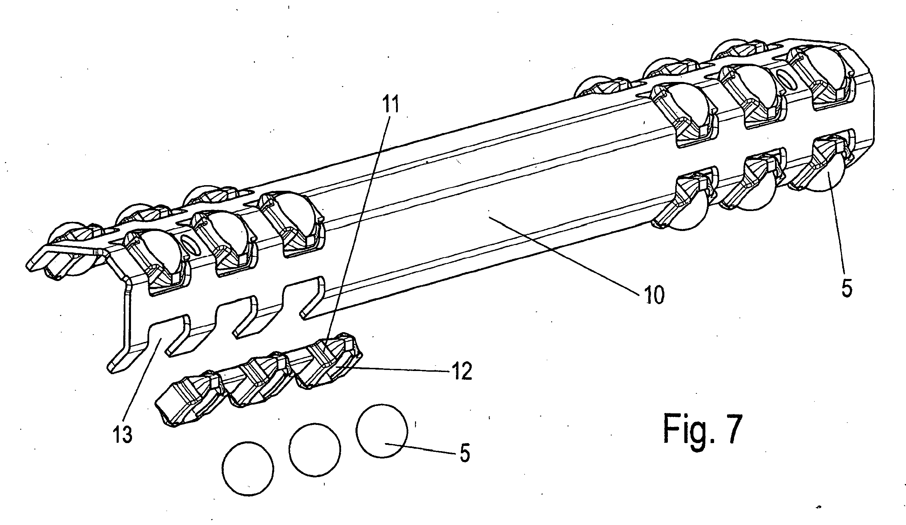

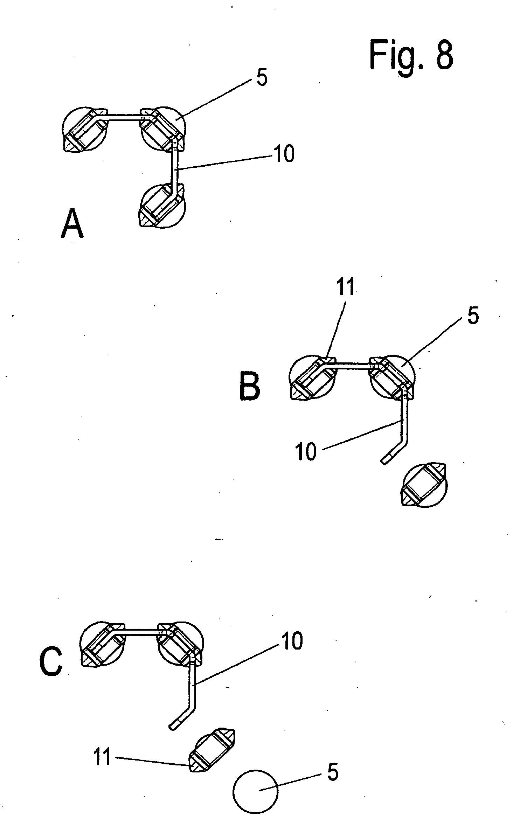

In den Figuren 4 bis 8 ist eine modifizierte Ausführungsform eines Wälzkörperkäfigs 10 gezeigt, der eine Leiste aus einem Trägermaterial mit höherer Festigkeit aufweist, in der einzelne Aussparungen 13 an zwei gegenüberliegenden Enden ausgebildet sind. Auf jeder Seite sind in Längsrichtung drei voneinander beabstandete Aussparungen 13 vorgesehen, in denen jeweils ein kugelförmiger Wälzkörper 5 aufgenommen ist. In einer Ebene senkrecht zur Längsrichtung sind jeweils drei Wälzkörper 5 an dem Wälzkörperkäfig 10 vorgesehen. In jeder Aussparung 13 sind an dem Wälzkörperkäfig 10 Wälzkörperhalter 11 aus einem schmierstoffhaltigen Material vorgesehen. Die Wälzkörperhalter 11 können an den Aussparungen 13 des Wälzkörperkäfigs 10 form-, kraft- oder stoffschlüssig festgelegt sein. Wie in den Figuren 7 sowie 8A bis 8C gezeigt ist, können die kugelförmigen Wälzkörper 5 zunächst in Aufnahmen 12 der Wälzkörperhalter 11 eingefügt werden. Dort können die Wälzkörper 5 rastend festgelegt sein, wobei der Wälzkörperhalter 11 so ausgebildet ist, dass drei Aufnahmen 12 vorgesehen sind und der Wälzkörperhalter 11 dann an den entsprechenden Aussparungen 13 der Schienen des Wälzkörperkäfigs 10 montiert wird. Es ist auch möglich, mit einem Wälzkörperhalter mehr als drei Wälzkörper 5, beispielsweise sechs oder neun Wälzkörper 5 aufzunehmen.

Auch bei diesem Ausführungsbeispiel liegen die Wälzkörper 5 mit einer Kontaktfläche an einem schmierstoffhaltigen Material an, so dass bei der Benutzung der Auszugsführung und Bewegung der Wälzkörper 5 eine kontinuierliche Schmierung erfolgt.

Bei einem Verfahren zur Herstellung einer Auszugsführung werden zunächst eine Führungsschiene und mindestens eine Laufschiene durch Stanzen und Biegen eines Metallbleches hergestellt. Zudem werden ein oder mehrere poröse Körper, der oder die zumindest einen Teil eines Wälzkörperkäfigs bildet bzw. bilden, mit Schmierstoff getränkt. Der Schmierstoff zieht dann jeweils in den porösen Körper ein und kann dann später wieder abgegeben werden. Der Tränkvorgang wird vorzugsweise in einem Zeitraum zwischen 10 und 30 Stunden, insbesondere 20 bis 28 Stunden durchgeführt. Anschließend werden die Führungsschiene, der Wälzkörperkäfigs und die mindestens eine Laufschiene zu einer Auszugsführung zusammengesetzt, wobei ein Schmieren der Wälzkörper und der Laufflächen durch Bewegen der mindestens einen Laufschiene relativ zu der Führungsschiene erfolgt.

Der poröse Körper für den Wälzkörperkäfig kann dabei aus Kunststoff durch Spritzguss hergestellt werden, insbesondere im zwei Komponenten Spritzgussverfahren, um das Kunststoffmaterial gleichzeitig an einem Trägermaterial festzulegen.

### Bezugszeichenliste

- 1: Auszugsführung
- 2: Führungsschiene
- 3: Laufschiene
- 4: Mittelschiene
- 5: Wälzkörper
- 6: Wälzkörperkäfig
- 7: Laufbahnen
- 10: Wälzkörperkäfig
- 11: Wälzkörperhalter
- 12: Aufnahmen
- 13: Aussparung

## Patentansprüche

1. Auszugsführung (1) für Möbel, mit einer an einem Möbelkorpus montierbaren Führungsschiene (2) und mindestens einer über Wälzkörper (5) an der Führungsschiene (2) verfahrbar gelagerten Laufschiene (3, 4), wobei die Laufschiene (3) über Wälzkörper (5) an einer Mittelschiene (4) gelagert ist, die wiederum über Wälzkörper (5) an der Führungsschiene (2) verfahrbar gelagert ist, wobei die Wälzkörper (5) in einem Wälzkörperkäfig (10) gelagert sind, der zumindest teilweise aus einem schmierstoffhaltigen Material besteht, **dadurch gekennzeichnet, dass** der Wälzkörperkäfig (10) eine Vielzahl von Taschen (13) aufweist, in die jeweils ein Wälzkörperhalter (11) aus schmierstoffhaltigem Material mit einem Wälzkörper (5) eingelagert ist.

2. Auszugsführung nach Anspruch 1, **dadurch gekennzeichnet, dass** die Wälzkörper (5) an dem schmierstoffhaltigen Material mit einer Kontaktfläche entlang gleiten.

3. Auszugsführung nach Anspruch 2, **dadurch gekennzeichnet, dass** über das schmierstoffhaltige Material die Wälzkörper bei einer Bewegung der Auszugsführung (1) an der Kontaktfläche benetzbar sind.

4. Auszugsführung nach einem der Ansprüche 1 bis 3, **dadurch gekennzeichnet, dass** das schmierstoffhaltige Material ein poröser Körper (11) aus Sintermaterial oder Kunststoff ist, in dem Öl als Schmierstoff eingelagert ist.

5. Auszugsführung nach Anspruch 1, **dadurch gekennzeichnet, dass** der Wälzkörperhalter (11) form-, kraft-, und / öder stoffschlüssig an dem Wälzkörperkäfig (10) festgelegt ist.

## Claims

1. A pull-out guide (1) for a piece of furniture, comprising a guide rail (2) which can be mounted on a furniture body and at one running rail (3, 4) which is movably mounted via rolling bodies (5) on the guide rail (2), wherein the running rail (3) is mounted via rolling bodies (5) on a central rail (4), which, in turn, is mounted movably on the guide rail (2) via rolling bodies (5), wherein the rolling bodies (5) are mounted in a rolling body cage (10) which consists at least partly of a lubricant-containing material, **characterized in that** the rolling body cage (10) comprises a plurality of pockets (13) in which one respective rolling body retainer (11) made of lubricant-containing material is embedded with a rolling body (5).

2. A pull-out guide according to claim 1, **characterized in that** the rolling bodies (5) slide with a contact surface along the lubricant-containing material.

3. A pull-out guide according to claim 2, **characterized in that** the rolling bodies can be wetted on the contact surface via the lubricant-containing material during a movement of the pull-out guide (1).

4. A pull-out guide according to one of the claims 1 to 3, **characterized in that** the lubricant-containing material is a porous body (11) made of sintered material or plastic in which oil is embedded as a lubricant.

5. A pull-out guide according to claim 1, **characterized in that** the rolling body retainer (11) is fixed to the rolling body cage (10) in an interlocking, frictionally engaged and/or materially bonded manner.

## Revendications

1. Guidage d'extraction (1) pour meuble, avec un rail de guidage (2) pouvant être monté sur un corps de meuble et au moins un rail de roulement (3, 4) logé de manière mobile par le biais de corps de roulement (5) sur le rail de guidage (2), le rail de roulement (3) étant monté par l'intermédiaire de corps de roulement (5) sur un rail central (4) qui, de son côté, est monté de manière à pouvoir être déplacé sur le rail de guidage (2) par l'intermédiaire de corps de roulement (5), les corps de roulement (5) étant logés dans une cage de corps de roulement (10) qui se compose au moins en partie d'un matériau contenant du lubrifiant, **caractérisé en ce que** la cage de corps de roulement (10) présente une pluralité de poches (13), dans lesquelles est stocké respectivement un support de corps de roulement (11) en un matériau contenant du lubrifiant avec un corps de roulement (5).

2. Guidage d'extraction selon la revendication 1, **caractérisé en ce que** les corps de roulement (5) glissent le long du matériau contenant du lubrifiant avec une surface de contact.

3. Guidage d'extraction selon la revendication 2, **caractérisé en ce que** les corps de roulement peuvent être humidifiés par le matériau contenant du lubrifiant lors d'un mouvement du guidage d'extraction (1) sur la surface de contact.

4. Guidage d'extraction selon l'une quelconque des revendications 1 à 3, **caractérisé en ce que** le matériau contenant du lubrifiant est un corps poreux (11) en un matériau fritté ou plastique, dans lequel de l'huile est stockée comme lubrifiant.

5. Guidage d'extraction selon la revendication 1, **caractérisé en ce que** le support de corps de roulement (11) est fixé par complémentarité de formes, à force et/ou par liaison de matière sur la cage de corps de roulement (10).
